# EUROPÄISCHE PATENTSCHRIFT

(11) **EP 0 693 726 B1**
(45) Veröffentlichungstag und Bekanntmachung des Hinweises auf die Patenterteilung: **21.03.2001**
(21) Anmeldenummer: 95110377.9
(22) Anmeldetag: 04.07.1995
(51) Int. Cl.: G06F 11/26, G06F 11/14, G06F 11/00, G06F 11/16

(54) **Datenübertragungsverfahren in einem Echtzeitdatenverarbeitungssystem**
Method of data transmission in a real-time data processing system
Procédé de transmission de données dans un système de traitement de données en temps réel

(30) Priorität: 16.07.1994 DE 4425254
(43) Veröffentlichungstag der Anmeldung: 24.01.1996
(73) Patentinhaber: TEMIC TELEFUNKEN microelectronic GmbH, 90411 Nürnberg (DE)
(72) Erfinder: Spies, Hans, D-85276 Pfaffenhofen (DE); Hora, Peter, D-86529 Schrobenhausen (DE); Fendt, Günter, D-86529 Schrobenhausen (DE); Zechmair, Derrik, D-86529 Schrobenhausen (DE)
(74) Vertreter: Maute, Hans-Jürgen, Dipl.-Ing.

(56) Entgegenhaltungen:
- DE-A- 2 527 098
- GB-A- 2 085 171
- US-A- 3 961 254
- US-A- 4 511 967
- US-A- 4 575 674
- US-A- 4 912 395

## Beschreibung

Die Erfindung betrifft ein Datenübertragungsverfahren in einem Echtzeitdatenverarbeitungssystem, bestehend aus einer Steuereinheit und wenigstens einer mit der Steuereinheit über eine Datenleitung verbundenen Funktionseinheit.

In Kraftfahrzeugen werden zunehmend elektronisch gesteuerte Systeme eingesetzt, um eine optimale Einstellung aller Kraftfahrzeugfunktionen in Echtzeit sicherstellen zu können. In der Regel werden diese Systeme von einer zentralen Steuereinheit überwacht und gesteuert.

Ein solches System führt beispielsweise einen in Echtzeit computergesteuerten Zündvorgang durch, indem abhängig von bestimmten von Sensoren gelieferten Daten für jeden Zündvorgang ein Zündwinkel berechnet wird. Diese Zündwinkelinformationen werden als digitale Daten über BUS-Leitungen der entsprechenden Funktionseinheit zugeführt. Dabei soll die Datenübertragung störsicher erfolgen.

Ein anderes System betrifft sicherheitsrelevante Systeme im Kraftfahrzeug, insbesondere Insassenrückhaltesysteme, wie Gurtstraffer, Airbags und Überrollbügel. Dabei ist es wichtig, daß die Steuersignale zwischen der zentralen Steuereinheit und den die Auslösemittel (beispielsweise die Zündpille der Zündeinheit eines Airbags) ansteuernden Endstufen im Auslösefall sicher und störunanfällig trotz extremster Störeinflüsse übertragen werden sollten. Andernfalls wäre bei verfälscht übertragenen Endstufensteuersignalen der Insassenschutz nicht in allen Fällen sichergestellt.

Der Erfindung liegt daher die Aufgabe zugrunde, ein Datenübertragungsverfahren für ein Echtzeitdatenverarbeitungssystem, bestehend aus einer Steuereinheit und wenigstens einer mit der Steuereinheit über eine Datenleitung verbundenen Funktionseinheit (die sich auf derselben Leiterplatte befinden kann), anzugeben, das trotz extremsten Störeinflüssen eine sichere und störunanfällige Datenübertragung zuläßt und das mit wenig schaltungstechnischem Aufwand realisierbar ist.

Diese Aufgabe wird durch die im Patentanspruch 1 aufgeführten Merkmale gelöst. Hiernach werden die von der Steuereinheit auf den Arbeitsspeicher der Funktionseinheit zu übertragenden Daten nicht direkt in den Arbeitsspeicher geladen, sondern zuvor in einem Pufferspeicher abgelegt, der aus einem Schieberegister und einem diesen nachgeschalteten Zwischenspeicher aufgebaut ist. Die zu übertragenden Daten werden zunächst seriell in das Schieberegister eingelesen und anschlieβend in den Zwischenspeicher übernommen. Nun werden die in dem Zwischenspeicher abgelegten Daten aus sicherheitstechnischen Gründen in das Schieberegister rückgelesen und von dort seriell zur Steuereinheit übertragen, so daß ein Vergleich dieser Daten mit den ursprünglich von der Steuereinheit ausgegebenen Daten möglich ist. Bei Übereinstimmung der miteinander verglichenen Daten werden diese Daten aus dem Zwischenspeicher in den Arbeitsspeicher der Funktionseinheit übernommen. Da die Übernahme der Daten in den Arbeitsspeicher nur bei vorher erfolgreich durchgeführtem Datenabgleich erfolgt, wird ausgeschlossen, daß aufgrund von Störeinflüssen bei der Datenübertragung verfälschte Daten in den Arbeitsspeicher der Funktionseinheit eingelesen werden. Somit wird trotz einer seriellen Datenübertragung eine störsichere Informationsübertragung sichergestellt, so daß gegenüber einer parallelen Datenübertragung, die in der Regel eine sichere Datenübertragung erlaubt, eine Vielzahl von Anschlüssen an der Funktionseinheit eingespart wird, was auch zu einer Kostenreduzierung führt.

Zur Erhöhung der Störsicherheit bei der Datenübertragung ist es gemäß einer Weiterbildung der Erfindung vorteilhaft, beim seriellen Einlesen der zu übertragenden Daten in das Schieberegister die hierzu erforderlichen Taktimpulse zu zählen und anschließend die Übernahme dieser Daten in den Zwischenspeicher nur dann zuzulassen, wenn die Anzahl dieser Taktimpulse einen bestimmten Wert aufweist, der der Anzahl der Registerzellen des Schieberegisters entspricht.

In entsprechender Weise kann diese Methode zur störfreien Datenübertragung auch beim Rücklesen der Daten aus dem Zwischenspeicher erfolgreich angewendet werden, indem auch beim seriellen Auslesen der Daten aus dem Schieberegister die hierzu erforderliche Anzahl von Taktimpulsen gezählt und die Übernahme der Daten in den Arbeitsspeicher nur dann zugelassen wird, wenn neben dem positiven Vergleichsergebnis auch eine bestimmte Taktanzahl vorliegt.

Bei einer weiteren vorteilhaften Weiterbildung des Datenübertragungsverfahrens kann der zu übertragende Datensatz eine Kennung aufweisen, die nach dem Einlesen in das Schieberegister von der Funktionseinheit überprüft wird. Wird die Kennung als richtig erkannt, wird die Datenübertragung auf den Zwischenspeicher zugelassen, wenn nicht noch zusätzlich die Bedingung "richtige Taktanzahl" vorliegen muß. Durch diese weitere, die Datenübertragung vom Schieberegister in den Zwischenspeicher regelnde Bedingung wird eine weitere Verbesserung der Störsicherheit bei der Datenübertragung erzielt. Werden mehrere Funktionseinheiten von der Steuereinheit angesteuert, so kann diese Kennung auch dazu benutzt werden, die Daten hinsichtlich ihrer Zugehörigkeit zu den einzelnen Funktionseinheiten zu kennzeichnen.

Liegen nun die Bedingungen für die Übertragung der Daten aus dem Schieberegister in den Zwischenspeicher nicht vor, wird beispielsweise die Kennung als nicht richtig erkannt oder liegt die erforderliche Taktzahl nicht vor, wird das Übertragungsverfahren durch die Steuereinheit von neuem begonnen, indem nochmals die zu übertragenden Daten in das Schieberegister eingelesen werden. Dies wird vorzugsweise derart durchgeführt, daß zunächst alle Stellen des Schieberegisters mit den gleichen logischen Werten beschrieben und anschließend diese Daten aus dem Schieberegister in einem Speicher der Steuereinheit ausgelesen werden. Nun führt der Vergleich der falschen Daten mit den ursprünglich von der Steuereinheit ausgegebenen Daten zu dem Ergebnis, daß keine Übereinstimmung vorliegt, so daß nunmehr die Steuereinheit erneut die Datenübertragung beginnt.

Der Versuch der Datenübertragung wird auch dann erneut vorgenommen, wenn die Bedingungen zur Übernahme in den Arbeitsspeicher nicht vorliegen, wenn also die erforderliche Taktzahl beim Einlesen bzw. Rückauslesen in den Speicher der Steuereinheit nicht erreicht wird oder die rückausgelesenen Daten mit den ursprünglichen Daten nicht übereinstimmen.

Ferner kann bei einer weiteren vorteilhaften Ausführungsform der Erfindung die Bereitschaft zur Übernahme der in das Schieberegister eingelesenen Daten in den Zwischenspeicher durch ein von der Steuereinheit erzeugtes Strobe-Signal angezeigt werden. Führt ein solches Strobe-Signal zum erfolgreichen Einlesen der Daten in den Zwischenspeicher, bewirkt die Rücknahme dieses Strobe-Signals durch die Steuereinheit die Einleitung des Rücklesevorganges. War schließlich auch der Rücklesevorgang erfolgreich, kann bei einer letzten vorteilhaften Weiterbildung der Erfindung die Übernahme der Daten in den Arbeitsspeicher durch ein von der Steuereinheit erzeugtes Enable-Signal erfolgen.

Im folgenden soll das erfindungsgemäße Verfahren anhand eines Ausführungsbeispieles im Zusammenhang mit den Zeichnungen dargestellt und erläutert werden. Es zeigen:
- Figur 1: ein Blockschaltbild eines Datenverarbeitungssystems für ein Kraftfahrzeug mit einer Steuereinheit und zwei Funktionseinheiten, die über Datenleitungen miteinander verbunden sind,
- Figur 2: zwei Kommandotabellen zur Übertragung der Daten zwischen der Steuereinheit und den Funktionseinheiten,
- Figur 3: ein Flußdiagramm für das Einschreiben von Daten in eine Funktionseinheit,
- Figur 4: ein Flußdiagramm zur Durchführung der Funktion "Gegenlesen" und
- Figur 5: ein Flußdiagramm für die Übertragung von Daten aus den Funktionseinheiten in die Steuereinheit.

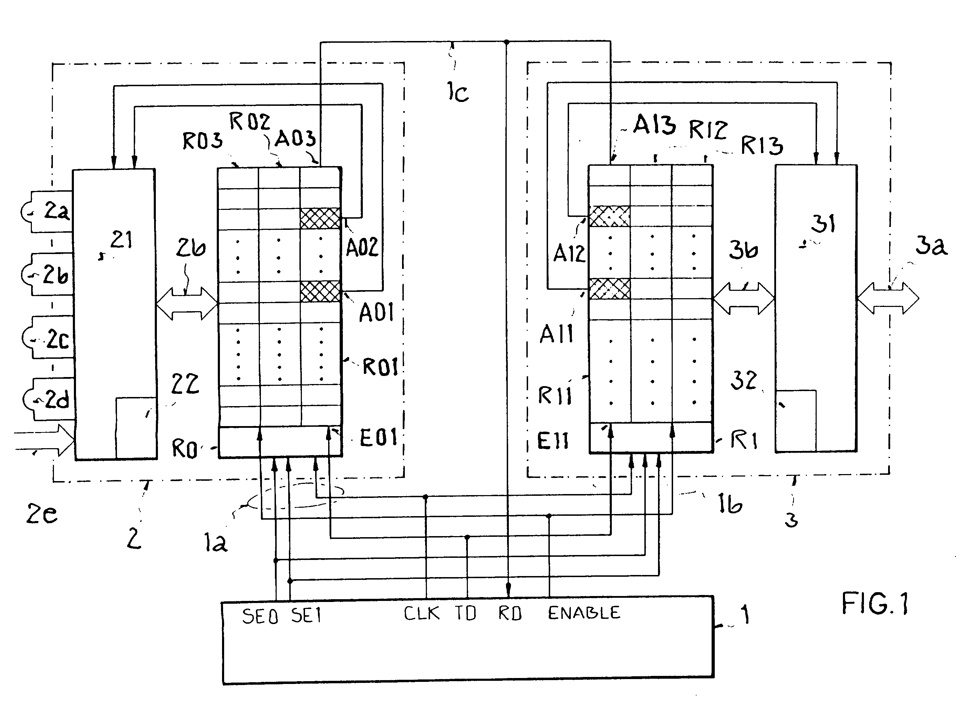

Das Datenverarbeitungssystem nach Figur 1, wie es beispielsweise in einem Kraftfahrzeug eingesetzt wird, zeigt eine zentrale Steuereinheit 1, die über Datenleitungen mit zwei Funktionseinheiten (evtl. auf derselben Platine) 2 und 3 verbunden ist.

Die Funktionseinheit 2 übernimmt die Funktion einer Auslöseschaltung eines passiven Insassenschutzsystems für Fahrzeuge im Falle eines Crash-Ereignisses. Dabei übernimmt eine Interface- und Endstufenschaltung 21 die direkte Ansteuerung der Fahrer- und Beifahrer-Airbags 2a und 2b sowie der Gurtstraffer 2c und 2d für Fahrer und Beifahrer, die als Stellglieder aufzufassen sind. Daneben können noch weitere Sicherheitsfunktionen wie Seiten-Airbags für Fahrer und Beifahrer als auch Überrollbügel implementiert werden. Schließlich können entsprechende Sensorsignale 2e, die beispielsweise die Sitzbelegungserkennung betreffen, dieser Schaltung 21 zugeführt werden. Die Funktionseinheit 2 umfaßt ferner ein Register R0, das aus einem Schieberegister R01, einem Zwischenregister R02 und einem Arbeitsspeicher R03 mit jeweils n-Bit-Stellen aufgebaut ist, wobei n beispielsweise 16 betragen kann. Über eine Datenleitung 2b erfolgt der Austausch von Daten zwischen der Schaltung 21 und dem Register R0. Das Schieberegister R01 weist neben einem seriellen Eingang E01 und einem seriellen Ausgang A03 zwei Parallelausgänge A01 und A02 auf, deren Ausgänge auf die Interface- und Endstufenschaltung 21 geführt sind. Der Datenaustausch mit der Steuereinheit 1 erfolgt über Datenleitungen 1a, während die über den seriellen Ausgang A03 des Schieberegisters R01 ausgelesenen Daten über eine Leitung 1c der Steuereinheit 1 zugeführt werden.

Die Funktionseinheit 3 ist in entsprechender Weise mit einem Register R1, das ebenfalls ein Schieberegister R11, ein Zwischenregister R12 und ein Arbeitsregister R13 aufweist, sowie mit einer Interface- und Endstufenschaltung 31 aufgebaut. Das Register R1 und die genannte Schaltung 31 kommunizieren über eine Datenleitung 3b. Diese Funktionseinheit 3 führt beispielsweise das Motormanagement durch, wobei insbesondere über eine mit der Schaltung 31 verbundene Datenleitung 3a den Zündwinkel bestimmende Stellglieder gesteuert werden. Entsprechend dem Schieberegister R01 der Funktionseinheit 2 weist auch das Schieberegister R11 der Funktionseinheit 3 einen seriellen Eingang E11, einen seriellen Ausgang A13 sowie zwei Parallelausgänge A11 und A12 auf, wobei die beiden zuletzt genannten Ausgänge an die Interface- und Endstufenschaltung 31 angeschlossen sind. Der Datenaustausch mit der Steuereinheit 1 erfolgt über Datenleitungen 1b sowie über die schon genannte Datenleitung 1c.

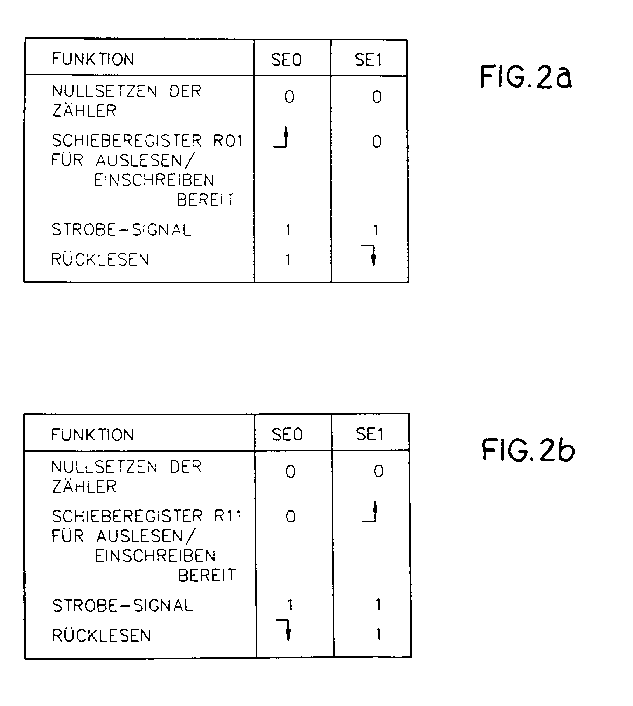

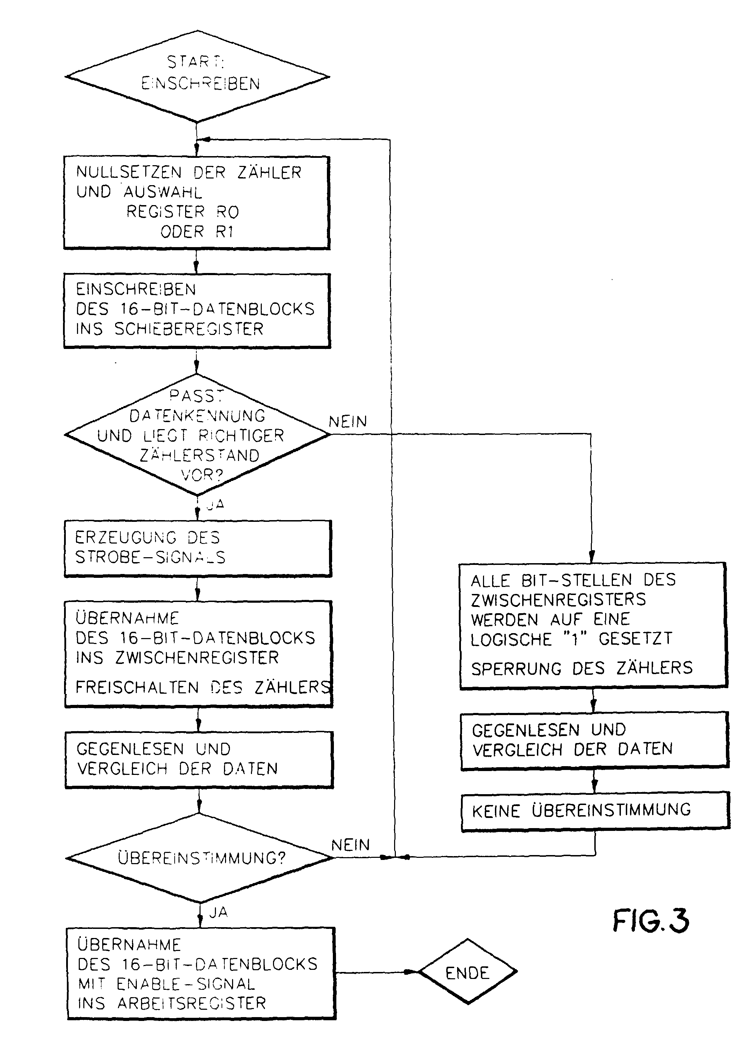

Im folgenden soll nun das erfindungsgemäße Datenübertragungsverfahren zwischen der Steuereinheit 1 und einem der beiden Register R0 oder R1 im Zusammenhang mit dem Flußdiagramm nach Figur 3 und den Kommandotabellen nach Figur 2 erläutert werden. Die Steuerung der Übertragung der Daten von der Steuereinheit 1 auf das Register R0 bzw. R1 erfolgt mittels zweier Steuersignale SE0 und SE1, die an gleichnamig bezeichneten Ausgängen der Steuereinheit 1 zur Verfügung stehen und über die schon genannten Datenleitungen 1a und 1b den beiden Registern R0 und R1 zugeführt werden. Zur Steuerung der einzelnen Abläufe wird über einen Taktausgang CLK der Steuereinheit 1 ein Taktsignal den Registern R0 und R1 zugeführt. Weiterhin werden die auf das Register R0 oder R1 zu übertragenden Daten an einem Ausgang TD der Steuereinheit 1 zur Verfügung gestellt. Die über den Ausgang A03 bzw. A13 des Schieberegisters R01 bzw. R11 ausgelesenen Daten werden einem Ausgang RD der Steuereinheit 1 zugeführt. Schließlich wird von einer Steuereinheit 1 ein Enable-Signal an einem gleichnamig bezeichneten Ausgang erzeugt.

Falls die Register R0 und R1 beispielsweise jeweils 16 Stellen aufweisen, werden auch jeweils 16 Bit-Datenblocks übertragen. Die Datenübertragung beginnt gemäß dem Flußdiagramm 3 mit der Funktion "Nullsetzen der Zähler" mit den Kommandos SE0 = 0 und SE1 = 0 nach den Kommandotabellen der Figuren 2a und 2b. Diese Zähler sind Bestandteil der Interface- und Endstufenschaltung 21 bzw. 31 und sind mit den Bezugszeichen 22 und 32 bezeichnet. Nun erfolgt die Auswahl des Registers, auf das der 16 Bit-Datenblock übertragen werden soll. Die entsprechenden Steuerpegel für die Steuersignale SE0 und SE1 sind wiederum den Kommandotabellen der Figuren 2a und 2b zu entnehmen.

Soll beispielsweise das Schieberegister R01 ausgewählt werden, so wechselt das Steuersignal SE0 von einer logischen "0" (LOW-Pegel) auf eine logische "1" (HIGH-Pegel), das Steuersignal SE1 zeigt weiterhin eine logische "0" (vgl. Fig. 2a, Funktion "Schieberegister R01 für Auslesen/Einschreiben bereit"). Bei Auswahl des anderen Schieberegisters R11 sind die entsprechenden Signalpegel der Steuersignale SE0 und SE1 nach Figur 2b zu erzeugen. Anschließend erfolgt das Einlesen des 16 Bit-Datenblocks in das ausgewählte Schieberegister R01 mit 16 Taktimpulsen. Der 16 Bit-Datenblock enthält zwei Kennungsbits, die an den entsprechenden Bitstellen des Schieberegisters R01 mit den beiden parallelen Ausgängen A01 und A02 liegen. Diese Kennungsbits stellen einen Datenschlüssel dar und werden zur Überprüfung der Interface- und Endstufenschaltung 21 zugeführt. Damit der in das Schieberegister R01 eingelesene 16 Bit-Datenblock ins Zwischenregister R02 mittels eines Strobe-Signals übernommen werden kann, muß einerseits der genannte Datenschlüssel passen und andererseits der Zähler 22 einen Zählerstand 16 aufweisen. Die Kennungsbits können beispielsweise jeweils eine logische "0" aufweisen. Paßt also der Datenschlüssel und liegt gleichzeitig der richtige Zählerstand vor, führt das Strobe-Signal (vgl. Fig. 2a: SE0 = 1 und SE1 = 1) zur Übernahme des 16 Bit-Datenblocks in den Zwischenspeicher R02 und gleichzeitig wird der Zähler 22 für die weitere Taktung bis zum Zählerstand 32 freigeschaltet (vgl. Fig. 3).

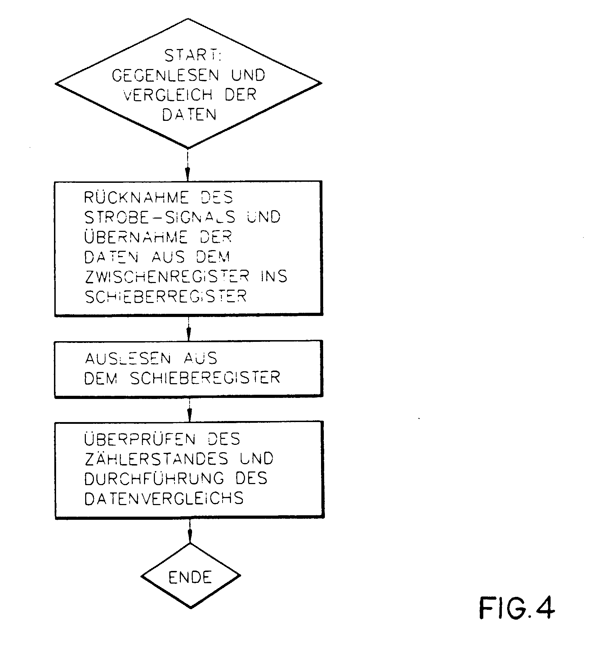

Im weiteren erfolgt nun eine der störsicheren Datenübertragung dienende Maßnahme, nämlich Gegenlesen der in den Zwischenspeicher R02 eingeschriebenen Daten durch die Steuereinheit und Vergleich dieser Daten mit den ursprünglich von der Steuereinheit 1 ausgegebenen Daten (vgl. Figur 3). Das entsprechende Flußdiagramm "Gegenlesen und Vergleich der Daten" ist in Figur 4 dargestellt. Hierzu wird das Strobe-Signal gemäß der Kommandotabelle nach Figur 2a zurückgenommen, d. h. das Steuersignal SE1 wechselt von einer logischen "1" wieder auf die logische "0". Dies hat zur Folge, daß sofort der 16 Bit-Datenblock vom Zwischenregister R02 in das Schieberegister R01 zurückgelesen wird. Anschlieβend wird dieser 16 Bit-Datenblock über die Leitung 1c ausgelesen und in einem entsprechenden Speicher der Steuereinheit 1 abgelegt. Gleichzeitig zählt der Zähler 22 entsprechend der Anzahl der für das Auslesen notwendigen Takte hoch. Die Steuereinheit 1 nimmt nun einen Vergleich zwischen den ausgelesenen Daten sowie den über den Ausgang TD ausgegebenen Daten vor. Stimmen diese beiden 16 Bit-Datenblöcke überein und weist gleichzeitig der Zählerstand des Zählers 22 einen Zählerstand von 32 auf, kann der 16 Bit-Datenblock mit einem von der Steuereinheit 1 erzeugten Enable-Signal ins Arbeitsregister R03 übernommen werden. Die Datenübergabe ist damit beendet.

Liegt dagegen keine Übereinstimmung der Daten vor bzw. liegt der Wert des Zählerstandes nicht bei 32, beginnt das Datenübertragungsverfahren von neuem wie es in Figur 3 dargestellt ist.

Wenn ein Strobe-Signal zur Übertragung des 16 Bit-Datenblocks in das Zwischenregister R02 wegen Nichtübereinstimmung des Datenschlüssels bzw. wegen falschem Zählerstand nicht erzeugt werden kann, werden gemäß Figur 3 alle Bitstellen des Zwischenregisters R02 mit einer logischen "1" beschrieben und gleichzeitig der Zähler 22 gesperrt. Nun wird die schon oben beschriebene Maßnahme "Gegenlesen und Vergleich der Daten" gemäß dem Flußdiagramm nach Figur 4 durchgeführt. Da nun zwangsweise falsche Daten aus dem Schieberegister ausgelesen werden, insbesondere liegen falsche Kennungsbits vor, führt der Datenvergleich zu keiner Übereinstimmung. Auch in diesem Fall wird, wie in Figur 3 dargestellt ist, die Datenübertragung erneut vorgenommen.

Der Dateninhalt der zu übertragenden 16 Bit-Datenblöcke kann beispielsweise die Airbag-Auslösung betreffen oder die Durchführung eines Prüfzyklus' einleiten.

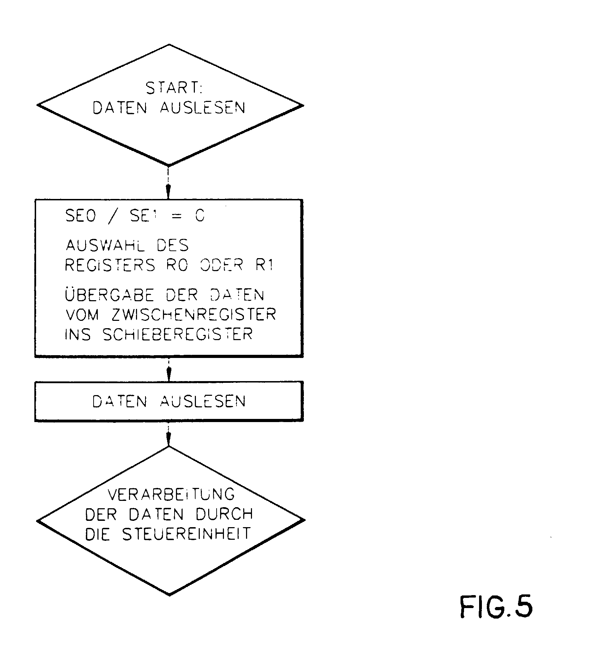

Das Datenverarbeitungssystem gemäß Figur 1 sieht auch vor, daß von den Interface- und Endstufenschaltungen 21 und 31 Statusinformationen an die Steuereinheit 1 übermittelt werden. Nach einer vorausgehenden, von der Steuereinheit ausgelösten Statusabfrage wird nach entsprechender Auswahl des Registers gemäß der Kommandotabellen nach Figur 2 die in das Zwischenregister eingelesenen Daten vom Schieberegister übernommen und anschließend über den Ausgang A03 oder A13 ausgelesen und anschließend von der Steuereinheit 1 verarbeitet. Das entsprechende Flußdiagramm zeigt Figur 5.

Die störsichere Datenübertragung von der Steuereinheit 1 auf das Register R0 oder R1 wird also dadurch erreicht, daß man die zu übertragenden Daten nicht direkt ins Arbeitsregister R03 oder R13 schreibt, sondern erst über das Zwischenregister R02 oder R12, dessen Dateninhalt gegengelesen und überprüft wird, in das Arbeitsregister R03 bzw. R13 gibt.

Die Datenübernahme ins Zwischenregister R02 bzw. R12 mit einem Strobe-Signal bzw. die Datenübernahme ins Arbeitsregister R03 bzw. R13 mit einem Enable-Signal ist aus sicherheitstechnischen Gründen nur möglich, wenn die internen Zähler 22 und 32 der Funktionseinheiten 2 und 3 die richtigen Zählerstände, im vorliegenden Beispiel 16 oder 32, aufweisen und die Kennungsbits, also die Datenschlüssel von der entsprechenden Funktionseinheit akzeptiert wird. Treffen diese Bedingungen zu, so ist eine gestörte oder verfälschte Datenübertragung auch unter extremsten Störeinflüssen nahezu ausgeschlossen.

Das zur Durchführung des erfindungsgemäßen Verfahrens dargestellte und erläuterte Datenverarbeitungssystem gemäß Figur 1 enthält Register mit jeweils 16 Bit-Stellen. Bei entsprechenden Anforderungen an die Funktionseinheiten können auch kürzere oder längere Register eingesetzt werden. Dabei müssen lediglich die entsprechenden Zähler angepaßt werden. Schließlich können auch abweichend von dem Ausführungsbeispiel nach Figur 1 mehr als zwei Funktionseinheiten von einer Steuereinheit 1 angesteuert werden, wenn hierzu weitere Steuerausgänge SE2, SE3, ... vorgesehen werden.

Schließlich ist das erfindungsgemäße Datenübertragungsverfahren nicht nur für den Einsatz in Datenverarbeitungssystemen für Kraftfahrzeuge geeignet, sondern kann auch in anderen Anwendungsgebieten, beispielsweise in Computer- und Telekommunikationsnetzwerken eingesetzt werden.

## Patentansprüche

1. Datenübertragungsverfahren in einem Echtzeitdatenverarbeitungssystem, bestehend aus einer Steuereinheit (1) und wenigstens einer mit der Steuereinheit (1) über eine Datenleitung (1a, 1b, 1c) verbundenen Funktionseinheit (2, 3), die ihrerseits ein Stellglied ansteuert, wobei diese Funktionseinheit (2, 3) einen Arbeitsspeicher (R03, R13), einen Zwischenspeicher (R02, R12) sowie ein Schieberegister (R01, R11) umfaßt und zur Übertragung von Daten zwischen der Steuereinheit (1) und der Funktionseinheit (2, 3) folgende Verfahrensschritt durchgeführt werden:
a) Serielles Einlesen der Daten in das Schieberegister (R01, R11),
b) Übernahme der Daten in den Zwischenspeicher (R02, R12),
c) Rückeinlesen der in den Zwischenspeicher (R02, R12) übernommenen Daten in das Schieberegister (R01, R11),
d) serielles Auslesen der Daten aus dem Schieberegister (R01, R11) und
e) Vergleich der ausgelesenen Daten mit den von der Steuereinheit (1) ausgegebenen Daten, wobei bei Übereinstimmung die Daten aus dem Zwischenspeicher (R02, R12) in den Arbeitsspeicher (R03, R13) übernommen werden.

2. Datenübertragungsverfahren nach Anspruch 1, dadurch gekennzeichnet, daß anstelle der Verfahrensschritte a) und b) folgende Verfahrensschritte durchgeführt werden:
a1) Serielles Einlesen der Daten in das Schieberegister (R01, R11), wobei die zum Einlesen erforderlichen Taktimpulse gezählt werden und
b1) Übernahme der Daten in den Zwischenspeicher (R02, R12), falls die Anzahl der zum Einlesen der Daten in das Schieberegister (R01, R11) erforderlichen Taktimpulse einen bestimmten Wert aufweist.

3. Datenübertragungsverfahren nach Anspruch 1 oder 2, dadurch gekennzeichnet, daß anstelle der Verfahrensschritte d) und e) folgende Verfahrensschritte durchgeführt werden:
d1) serielles Auslesen der Daten aus dem Schieberegister (R01, R11), wobei die zum Auslesen erforderlichen Taktimpulse gezählt werden und
e1) Vergleich der ausgelesenen Daten mit den von der Steuereinheit (1) ausgegebenen Daten, wobei bei Übereinstimmung die Daten aus dem Zwischenspeicher (R02, R12) in den Arbeitsspeicher (R03, R13) übernommen werden.

4. Datenübertragungsverfahren nach einem der vorangehenden Ansprüche, dadurch gekennzeichnet, daß nach Verfahrensschritt b) oder b1) die Daten nur dann in den Zwischenspeicher (R02, R12) übernommen werden, wenn eine Kennung der Daten als richtig erkannt wird.

5. Datenübertragungsverfahren nach einem der Ansprüche 2 bis 4, dadurch gekennzeichnet, daß bei Nichtübernahme der Daten aus dem Schieberegister (R01, R11) in den Zwischenspeicher (R02, R12) gemäß Verfahrensschritt b1) erneut Verfahrensschritt a1) durchgeführt wird.

6. Datenübertragungsverfahren nach Anspruch 5, dadurch gekennzeichnet, daß bei Nichtübernahme der Daten in den Zwischenspeicher (R02, R12) folgende Verfahrensschritte durchgeführt werden:
f) Beschreiben aller Bit-Stellen des Schieberegisters (R01, R11) mit gleichen logischen Werten,
g) Auslesen der Daten aus dem Schieberegister (R01, R11),
h) Vergleich der ausgelesenen Daten mit den von der Steuereinheit (1) ausgegebenen Daten und
i) erneute Durchführung des Datenübertragungsverfahrens mit Verfahrensschritt a).

7. Datenübertragungsverfahren nach einem der vorangehenden Ansprüche, dadurch gekennzeichnet, daß bei Nichtübernahme der Daten aus dem Zwischenspeicher (R02, R12) in den Arbeitsspeicher (R03, R13) gemäß Verfahrensschritt e) oder e1) das Datenübertragungsverfahren erneut mit Verfahrensschritt a) oder a1) durchgeführt wird.

8. Datenübertragungsverfahren nach einem der vorangehenden Ansprüche, dadurch gekennzeichnet, daß die Bereitschaft zur Übernahme der in das Schieberegister (R01, R11) eingelesenen Daten in den Zwischenspeicher (R02, R12) durch ein von der Steuereinheit (1) erzeugtes Strobe-Signal angezeigt wird.

9. Datenübertragungsverfahren nach einem der vorangehenden Ansprüche, dadurch gekennzeichnet, daß zum Rückeinlesen der Daten aus dem Zwischenspeicher (R02, R12) in das Schieberegister (R01, R11) die Steuereinheit (1) das Strobe-Signal zurücknimmt.

10. Datenübertragungsverfahren nach einem der vorangehenden Ansprüche, dadurch gekennzeichnet, daß die Bereitschaft zur Übernahme der Daten aus dem Zwischenspeicher (R02, R12) in den Arbeitsspeicher (R03, R13) durch ein von der Steuereinheit (1) erzeugtes Enable-Signal angezeigt wird.

## Claims

1. A method of transmitting data in a real time data processing system consisting of a control unit (1) and at least one functional unit (2, 3) which is connected via a data line (1a, 1b, 1c) to the control unit (1) and itself controls an actuating element, whereby this functional unit (2, 3) comprises a working store (R03, R13), a buffer store (R02, R12) and a shift register (R01, R11) and wherein the transmission of data between the control unit (1) and the functional unit (2, 3) is effected by means of the following method steps:
a) serially reading the data into the shift register (R01, R11),
b) transferring the data into the buffer store (R02, R12),
c) reading the data that was transferred into the buffer store (R02, R12) back into the shift register (R01, R11),
d) serially reading the data out of the shift register (R01, R11) and
e) comparing the read-out data with the data emitted by the control unit (1), whereby the data is then transferred from the buffer store (R02, R12) into the working store (R03, R13) when the data being compared is in agreement.

2. A method of transmitting data in accordance with Claim 1, characterised in that the following method steps are carried out instead of the method steps a) and b):
a1) serially reading-in the data into the shift register (R01, R11), whereby the clock pulses needed for the read-in process are counted and
b1) transferring the data into the buffer store (R02, R12) in the event that the number of clock pulses required for reading-in the data into the shift register (R01, R11) has a certain value.

3. A method of transmitting data in accordance with Claim 1 or 2, characterised in that the following method steps are carried out instead of the method steps d) and e):
d1) serially reading-out the data from the shift register (R01, R11) whereby the clock pulses needed for the read-out process are counted and
e1) comparing the read-out data with the data emitted by the control unit (1), whereby the data is then transferred from the buffer store (R02, R12) into the working store (R03, R13) when the data being compared is in agreement.

4. A method of transmitting data in accordance with any of the preceding Claims, characterised in that, following the method step b) or bl), the data is only transferred into the buffer store (R02, R12) if an identifier for the data has been correctly recognised.

5. A method of transmitting data in accordance with any of the Claims 2 to 4, characterised in that the method step a1) is carried out afresh in the event that the data is not transferred into the buffer store (R02, R12) from the shift register (R01, R11) in accordance with method step b1).

6. A method of transmitting data in accordance with Claim 5, characterised in that the following method steps are carried out in the event that the data is not transferred into the buffer store (R02, R12):
f) writing each bit position in the shift register (R01, R11) with the same logical value,
g) reading-out the data from the shift register (R01, R11),
h) comparing the read out data with the data emitted by the control unit (1) and
i) carrying-out the data transmission process afresh using method step a).

7. A method of transmitting data in accordance with any of the preceding Claims, characterised in that, in the event that the data is not transferred into the working store (R03, R13) from the buffer store (R02, R12) in accordance with method step e) or el), the data transmission process is carried out afresh using method step a) or a1) .

8. A method of transmitting data in accordance with any of the preceding Claims, characterised in that the preparatory condition for transferring the data which has been read into the shift register (R01, R11) into the buffer store (R02, R12) is indicated by a strobe signal produced by the control unit (1).

9. A method of transmitting data in accordance with any of the preceding Claims, characterised in that the control unit (1) cancels the strobe signal in order to allow the data to be read back into the shift register (R01, R11) from the buffer store (R02, R12).

10. A method of transmitting data in accordance with any of the preceding Claims, characterised in that the preparatory condition for transferring the data into the working store (R03, R13) from the buffer store (R02, R12) is indicated by an enable signal produced by the control unit (1).

## Revendications

1. Système de transmission de données dans un système de traitement de données en temps réel, constitué par une unité de commande (1) et au moins une unité fonctionnelle (2,3), qui est reliée à l'unité de commande (1) par l'intermédiaire d'une ligne (1a,1b,1c) de transmission de données et pour sa part commande un organe de réglage, et dans lequel cette unité fonctionnelle (2,3) possède une mémoire de travail (R03,R13), une mémoire intermédiaire (R02,R12) ainsi qu'un registre à décalage (R01,R011), et pour la transmission de données entre l'unité de commande (1) et l'unité fonctionnelle (2,3), les étapes suivantes de procédé sont exécutées :
a) écriture en série des données dans le registre à décalage (R01,R11),
b) transfert des données dans la mémoire intermédiaire (R02,R12),
c) écriture en retour des données, transférées dans la mémoire intermédiaire (R02,R12), dans le registre à décalage (R01,R11),
d) lecture en série des données à partir du registre à décalage (R01,R11), et
e) comparaison des données lues aux données délivrées par l'unité de commande (1), auquel cas en cas de concordance les données tirées de la mémoire intermédiaire (R02,R12) sont transférées dans la mémoire de travail (R03,R13).

2. Système de transmission de données selon la revendication 1, caractérisé en ce que les étapes suivantes de procédé sont exécutées à la place des étapes de procédé a) et b) :
a1) écriture en série des données dans le registre à décalage (R01,R011), les impulsions de cadence nécessaires pour l'écriture étant comptées, et
b1) transfert des données dans la mémoire intermédiaire (R02,R12), dans le cas où le nombre des impulsions de cadence nécessaires pour l'écriture des données dans le registre à décalage (R01,R011) possède une valeur déterminée.

3. Procédé de transmission de données selon la revendication 1 ou 2, caractérisé en ce qu'à la place des étapes de procédé d) et e), on met en oeuvre des étapes de procédé suivantes :
d1) lecture en série des données à partir du registre à décalage (R01,R011), les impulsions de cadence nécessaires pour la lecture étant comptées, et
e1) comparaison des données lues aux données délivrées par l'unité de commande (1), auquel cas en cas de coïncidence, les données sont transférées de la mémoire intermédiaire (R02,R12) dans la mémoire de travail (R03,R13).

4. Procédé de transmission de données selon l'une des revendications précédentes, caractérisé en ce qu'après l'étape de procédé b) ou b1), les données sont transférées dans la mémoire intermédiaire (R02,R12) uniquement lorsqu'une caractérisation des données est identifiée comme correcte.

5. Procédé de transmission de données selon l'une des revendications 2 à 4, caractérisé en ce que dans le cas d'un non-transfert des données depuis le registre à décalage (R01,R11) dans la mémoire intermédiaire (R02,R12) conformément à l'étape de procédé bl), l'étape de procédé al) est exécutée à nouveau.

6. Procédé de transmission de données selon la revendication 5, caractérisé en ce que dans le cas d'un non-transfert des données dans la mémoire intermédiaire (R02,R12), les étapes opératoires suivantes sont mises en oeuvre :
f) écriture de valeurs logiques identiques dans toutes les positions binaires du registre à décalage (R01,R11),
g) lecture des données à partir du registre à décalage (R01,R11),
h) comparaison des données lues aux données délivrées par l'unité de commande (1), et
i) exécution réitérée du procédé de transmission de données avec l'étape de procédé a).

7. Procédé de transmission de données selon l'une des revendications précédentes, caractérisé en ce que lors du non-transfert des données depuis la mémoire intermédiaire (R02,R12) dans la mémoire de travail (R03,R13) conformément à l'étape de procédé e) ou e1), le procédé de transmission de données est exécuté à nouveau avec l'étape de procédé a) ou a1).

8. Procédé de transmission de données selon l'une des revendications précédentes, caractérisé en ce que l'état prêt pour le transfert des données écrites dans le registre à décalage (R01,R11), dans la mémoire intermédiaire (R02,R12) est affiché par un signal d'échantillonnage produit par l'unité de commande (1).

9. Procédé de transmission de données selon l'une des revendications précédentes, caractérisé en ce que pour l'écriture en retour des données depuis la mémoire intermédiaire (R02,R12) dans le registre à décalage (R01,R11), l'unité de commande (1) annule le signal d'échantillonnage.

10. Procédé de transmission de données selon l'une des revendications précédentes, caractérisé en ce que l'état prêt pour le transfert des données depuis la mémoire intermédiaire (R02,R12) à la mémoire de travail (R03,R13) est affiché par un signal de validation produit par l'unité de commande (1).
